# EUROPEAN PATENT SPECIFICATION

(11) **EP 3 501 277 B1**
(45) Date of publication and mention of the grant of the patent: **13.05.2020**
(21) Application number: 18212230.9
(22) Date of filing: 13.12.2018
(51) Int. Cl.: A01M 29/16, A01M 29/18

(54) **A DISSUADER FOR ANIMALS**
VORRICHTUNG ZUM ABSCHRECKEN VON TIEREN
DISPOSITIF POUR DISSUADER DES ANIMAUX

(30) Priority: 22.12.2017 IT 201700149496; 22.12.2017 IT 201700149500
(43) Date of publication of application: 26.06.2019
(73) Proprietor: Natech S.r.L., 53100 Siena (IT)
(72) Inventor: VIGNOLI, Fabio, 50142 Firenze (IT); PELOSI, Giulio, 51020 San Marcello Piteglio (Pistoia) (IT); GIORDANO, Stefano, 56121 Pisa (IT)
(74) Representative: Lunati & Mazzoni S.r.L.

(56) References cited:
- WO-A1-2017/079435
- CA-A1- 2 787 857
- DE-A1- 10 241 835
- US-A- 3 893 106
- US-A- 4 001 817
- US-A- 4 186 387
- US-A- 4 562 561

## Description

The present invention relates to a dissuader for animals of the type as recited in the preamble of the Claim 1.

In particular, the invention relates to a device which can be used to fend off animals, preferably ungulates (chamois, alpine ibexes, roe deer, wild boars, deer, etc.) protecting for example crops and residential areas. More specifically, the invention relates to a dissuader for wild boars and roe deer.

As is well-known, animals and in particular ungulates are attracted by food that is normally found inside gardens and, often, in cultivated fields where they enter causing great damage.

For this reason, the need to use enclosures and particularly dissuaders are becoming increasingly frequent.

Dissuaders emit sounds/lights that scare or at least annoy the animal who will therefore not move near the source of disturbance, namely the dissuader.

Alternatively, dissuaders envisage the emission of smells that are unpleasant for the animal or of contact repellent substances sprayed on the foliage of the budding vineyards making it unpleasant.

Some devices are disclosed in US3893106 and US4001817.

The above-mentioned well-known technique has some important drawbacks.

A first drawback, typical of enclosures, consists in the high material and building costs.

Another drawback of dissuaders is the small area affected by the disturbance and the fact that it is impossible to use such dissuaders and, in particular, acoustic and luminous ones close to residential areas or houses.

Moreover, dissuaders tend to lose their efficacy rapidly over time requiring frequent treatment or adjustments to the dissuaders.

A no small disadvantage is that dissuaders are often bothersome also for people and therefore for those who have to work near the enclosed area.

In this context, the technical task underlying the present invention is to devise a dissuader for animals capable of substantially obviating at least some of the above-mentioned drawbacks.

Within the scope of said technical task, an important purpose of the invention is to obtain a dissuader that allows to lastingly and optimally protect an area without requiring high costs.

Another objective is to have a dissuader that does not disturb human beings.

The technical task and specified purposes are achieved with a dissuader for animals as claimed in the appended Claim 1. Examples of preferred embodiments are described in the dependent claims.

Preferred embodiments are set forth in the dependent claims.

The characteristics and advantages of the invention are clearly evident from the following detailed description of preferred embodiments of the invention, with reference to the accompanying drawings, in which:
**Fig. 1** shows a dissuader for animals according to the invention; and
**Fig. 2** schematises the operation of the dissuader.

Herein, the measures, values, shapes and geometric references (such as perpendicularity and parallelism), when used with words like "about" or other similar terms such as "approximately" or "substantially", are to be understood as except for measurement errors or inaccuracies due to production and/or manufacturing errors and, above all, except for a slight divergence from the value, measure, shape or geometric reference with which it is associated. For example, these terms, if associated with a value, preferably indicate a divergence of not more than 10% from said value.

Furthermore, when used, terms such as "first", "second", "higher", "lower", "main" and "secondary" do not necessarily identify an order, a priority relationship or a relative position, but can simply be used to distinguish more clearly the different components from each other.

Unless otherwise indicated, the measurements and data provided in this document are to be considered using International Standard Atmosphere ICAO (ISO 2533). Unless otherwise specified, as is apparent from the following discussion, terms such as "treatment", "data processing", "determination", "calculation", or the like, are understood to refer to the action and/or processes of a computer or similar electronic computing device which manipulates and/or transforms data represented as physical, such as electronic sizes of registers of a computer system and/or memories, into other data similarly represented as physical quantities in computer systems, registers or other storage, transmission or information display devices.

With reference to the Figures, reference numeral **1** globally denotes the dissuader for animals according to the invention.

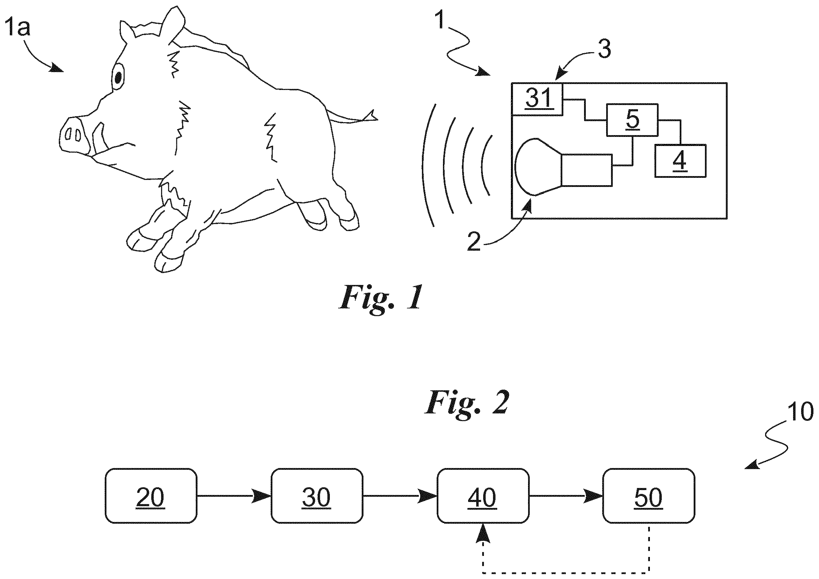

The dissuader 1 (Fig. 1) is adapted to be used to defend an area which has to be protected (such as cultivated land or a residential area) from the entry of animals **1a** and therefore to fend off animals, preferably ungulates. More specifically, the dissuader 1 is adapted to fend off wild boars and roe deer.

The dissuader 1 comprises an emitter **2** of at least one acoustic signal that fends off the animal.

The acoustic signal can comprise at least one sound emission that fends off the animal. The at least one sound emission is characterised by an emission period and in particular by a plurality of sound emissions suitably separated from each other by periods without emissions.

The sound emission period can be preset and can in particular have a duration of at least 2 seconds. More specifically, the period can substantially range between 2 and 10 seconds.

The period without emissions can be at least 2 seconds. More specifically, the period can substantially range between 3 and 6 seconds.

One or more of said sound emissions of a same acoustic signal can be the same or may differ.

Each sound emission can have a frequency substantially at least equal to 15 KHz in detail substantially ranging between 15 KHz and 100 KHz in greater detail between 15 KHz and 40 KHz and in even greater detail between 18 KHz and 30 KHz.

Each sound emission can have an emission power substantially at least equal to 100 dB and, in detail, to 120 dB. The power of said emission is measured at a distance of 1m from the emitter 2.

The emitter 2 is preferably adapted to define an emission period of said at least one sound emission.

The sound emission can be monophonic (not superimposed sound wave/s) and/or preferably polyphonic (that is with a plurality of distinct and superimposed sound waves) causing a dissonance effect in said animal 1a.

In particular, in the case of polyphonic sound emission the two or more sound waves are characterised by anharmonic frequencies, that is frequencies that are not integral multiples of integers.

Each sound wave can have a frequency substantially at least equal to 15 KHz and in detail approximately substantially ranging between 15 KHz and 100 KHz in greater detail between 15 KHz and 40 KHz and in even greater detail between 18 KHz and 30 KHz.

Each sound wave can have an emission power substantially at least equal to 100 dB and specifically to 120 dB.

Each sound wave can have a duration substantially not longer and in detail substantially equal to said emission period. In particular, in the case of polyphonic emission the duration of sound waves can differ or can be preferably the same.

The duration of the sound wave is at least equal to 2 seconds and in particular approximately ranging between 2 and 10 seconds.

The frequency of a sound wave can be constant and/or vary during its emission. Said sound wave frequency can be substantially at least equal to 15 KHz in detail approximately substantially ranging between 15 KHz and 100 KHz in greater detail between 15 KHz and 40 KHz and in even greater detail between 18 KHz and 30 KHz.

The sound emission preferably comprises and is in detail a composition of at least one main sound wave. The main sound wave comprises an alternation between constant and variable frequency periods. Said at least one sound wave envisages a first emission period at a first frequency; a second emission period at a frequency variable from the first to a second frequency; a third emission period at said second frequency; a fourth emission period at a frequency variable from the second to the first frequency.

The first frequency substantially ranges between 18 and 21 KHz.

The second frequency substantially ranges between 27 and 30 KHz.

The duration of each period of the main sound wave can range between 50 and 400 ms.

During the second and fourth period the variation of the main sound wave can be linear, logarithmic and/or exponential.

The sound emission preferably comprises and is in detail a composition of a plurality of said preferably different main sound waves (as described above). Such a diversity can be created randomly and in detail pseudorandomly as described above.

Such main sound waves can have a duration of one or more distinct or preferably equal periods.

The main sound waves may be mutually distinct from each other for at least one of the first and second frequencies and in detail for both said first and second frequencies.

It is set forth that in some cases the sound emission comprises one or more main sound waves and one or more secondary sound waves, that is not characterised by the four emission periods described above.

Said plurality of sound waves (main and/or secondary) can be emitted sequentially defining a sound emission that is variable over time. In other cases said plurality of waves can be emitted in mutual superimposition defining a polyphonic sound emission. In further cases said plurality of waves can be emitted in mutual superimposition and sequentially.

To sum up, each sound emission can be characterised by the emission parameters described above, that is the number of sound waves composing the sound emission (mono/polyphony), frequency, power, emission period and suitably period without emission; each sound wave can be characterised by wave parameters such as the frequency, power and/or duration.

The emission and/or wave parameters can be constant during an acoustic signal and/or between distinct acoustic signals. In an alternative preferred solution the emission and/or wave parameters can preferably vary randomly during an acoustic signal and/or between distinct acoustic signals (as described above) generating a random sound emission and hence a random acoustic signal.

The dissuader 1 comprises at least one actuator **3** of the emitter 2 adapted to define at least one active configuration wherein it commands the emitter 2 to emit at least one acoustic signal and an inactive configuration in which it imposes that the emitter 2 does not emit said acoustic signal.

The actuator 3 can comprise a presence detector **31** adapted to detect the presence of an animal 1a near the dissuader 1, i.e. close to the area that has to be protected.

The presence detector 31 is adapted to command the switch to the active or inactive configuration if it detects or does not detect respectively the animal 1a near the presence detector 31.

In particular the presence detector 31 is adapted to detect the distance of an animal 1a from said presence detector 31 and depending on such distance command the switch to the active or inactive configuration.

The presence detector 31 can comprise a video camera or an infrared sensor and, in particular, a passive infrared sensor (PIR) adapted to measure the infrared rays radiating from objects in its field of view.

The dissuader 1 can optionally comprise a memory at least of the perimeter of the area to be protected and of the position of the presence detector 31 compared to said perimeter; and the presence detector 31 is adapted to locate the animal 1a with respect to said perimeter and thereupon command the switch to the active configuration depending on the distance of said animal 1a from said perimeter.

The dissuader 1 comprises a random number generator **4** adapted to allow to randomly vary the acoustic signal (random acoustic signal).

The generator 4 can preferably be a pseudo-random number generator, that is numbers generated by a deterministic algorithm that produces a sequence which has approximately the same statistical properties of a number sequence generated by a random process. It can be a linear congruential generator, a lagged Fibonacci generator, a linear feedback shift register or a generalised feedback shift register.

Alternatively, the generator 4 may be a hardware random number generator (True Random Number Generator or TRNG) that generates random numbers from a physical process and, in particular, microscopic phenomena such as thermal noise or the photoelectric effect or other quantum phenomena.

In this document the term "random" refers to numbers or whatever is indifferently generated randomly or pseudorandomly.

The emitter 2 is adapted to vary the sound emission and in particular the sound wave depending on the generator 4 and specifically on the number that it randomly generates. For this purpose, the dissuader 1 can comprise a control unit 5 of at least the emitter 2.

The control unit 5 is adapted to determine the acoustic signal of the emitter 2 depending on said random number generator 4, that is on a random number generated by the latter.

The control unit 5 is adapted to define/modify at least one sound emission by varying at least one of the emission parameters depending on at least one random number generated by the generator 4. It is preferably adapted to define one or more sound waves by varying at least one of the wave parameters depending on at least one random number generated by the generator 4.

In particular, the generator 4 generates at least one random number and then the control unit 5 defines a new acoustic signal depending on said at least one random number when the actuator 3 commands the switch to the active configuration. The generator 4 preferably generates at least one random number and then the control unit 5 defines a new acoustic signal if, following a sound emission, the detector 31 still identifies the presence of the animal 1a (for example a movement towards the presence detector 31 and/or towards the perimeter of the area to be protected).

The operation of the dissuader 1, which was previously described structurally, identifies a new fending off method 10 (Fig. 2) animals.

The fending off method 10 comprises an activation stage **20** wherein the actuator 3 commands the switch to the active configuration of the dissuader 1 and specifically of the emitter 2.

During the activation stage 20 the actuator 3 commands the switch of the dissuader 1 to the active configuration when it detects the presence of the animal 1a near the actuator 3.

In particular, the presence detector 31 commands the switch to the active configuration when it detects the presence of an animal 1a close to the dissuader 1 or depending on the distance of the animal 1a from the presence detector 31 and in particular from the perimeter of the area to be protected.

Once the dissuader 1 has moved to the active state, the fending off method 10 comprises at least one emission stage **30** of the acoustic signal.

During the emission stage 30 the emitter 2 emits an acoustic signal comprising a sound emission that comprises at least one sound wave and preferably at least one main sound wave described above.

The sound emission preferably comprises and is in detail a composition of a plurality of said preferably different main sound waves. Such a diversity can be created randomly and in detail pseudorandomly as described in the present document.

It is set forth that in some cases the sound emission comprises one or more main sound waves or one or more secondary sound waves.

Said plurality of sound waves (main and/or secondary) can be emitted sequentially defining a sound emission that is variable over time. In other cases said plurality of waves can be emitted in mutual superimposition defining a polyphonic sound emission. In further cases said plurality of waves can be emitted in mutual superimposition and sequentially.

In particular, the sound emission is polyphonic and envisages two or more sound waves characterised by anharmonic frequencies, that is frequencies that are not integral multiples of integers. Each one of said waves can envisage the above-mentioned emission periods.

During emission stage 30 the emitter 2 can emit a random acoustic signal suitably comprising a polyphonic emission. The generator 4 generates a random number, and the control unit 5 defines an acoustic signal and in detail said sound emission (that is the one or more waves described above) depending on the random number and the emitter 2 emits the acoustic signal and in detail said sound emission determined by the control unit 5.

The fending off method 10 comprises a monitoring stage **40** of the fending off of the animal 1a suitably simultaneous or following said emission stage 30.

During this monitoring stage the actuator 3 and specifically the presence detector 31 check if, due to the emission of the acoustic signal, the animal 1a has wandered off or is at least wandering away.

Such a check of the wandering off of the animal 1a can be carried out if the detector 31 does not detect the animal 1a any more or if it detects it at a distance from the presence detector 31 and/or from said perimeter of the area to be protected which is greater than the one registered during the activation stage 20.

If the animal 1a has wandered off the control unit 5 takes the dissuader 1 to the inactive configuration.

If during the monitoring stage 40 the animal 1a has not wandered off from the dissuader 1, the dissuader 1 stays in the active configuration and the method 10 comprises at least one additional emission stage **50** following the emission stage 30 and suitably concurrent with said monitoring stage 40.

During the additional emission stage 50 the emitter 2 varies the sound emission and in particular the one or more sound waves (main and/or secondary) depending on at least one number generated randomly by the generator 4.

In detail, having checked that the animal 1a has not been scared by the emission during the emission stage 30, the generator 4 generates a random number that, through the control unit 5, is used by the emitter 2 to vary the acoustic signal and then emit such different acoustic signal.

Hence the acoustic signal during the additional emission stage is different from the acoustic signal during the emission stage. Such a difference can be obtained by varying one or more emission parameters and/or one or more wave parameters on the basis of the random number.

The animal 1a, in response to the new acoustic signal specific to the additional emission stage, wanders off allowing the control unit 5 to take the dissuader 1 to the inactive configuration.

If the animal 1a does not wander off, the fending off method 10 comprises a new additional emission stage 50 during which the generator 4 generates a new random number which is used to define and then emit a new acoustic signal.

The dissuader 1 and the fending off method 10 according to the invention achieve significant advantages.

Indeed, the opportunity to randomly vary the acoustic signal allows to always have different acoustic signals thereby preventing that the animal 1a gets used to an acoustic signal and therefore the loss of efficacy in fending off an animal 1a due to the repetition of the same identical acoustic signal.

Such an aspect is increased by the possibility of checking live the efficacy of an acoustic signal and therefore immediately varying the acoustic signal should it not be effective.

It is set forth how such efficacy is matched by the use of polyphonic emissions.

In particular, the use of polyphonic emissions suitably of waves with anharmonic frequencies allows to have a sound emission and therefore a dissonant acoustic signal and hence highly disturbing for the animal 1a.

Such a high disturbance of the animal 1a is guaranteed by the particular wave identified by the inventors who, thanks to the four particular emission periods, has proved to be extremely effective in fending off the animals 1a and in particular ungulates.

Other advantages are the user-friendliness, the limited costs of the dissuader 1 and the particular frequency which is used that does not disturb other animals.

Variations falling within the scope of the inventive concept defined by the claims may be made to the invention.

For example as an alternative or in addition to the presence detector 31, the actuator 3 can comprise connection modes adapted to allow remote control of the switch between the active and inactive configuration suitably for a given activation period. All details may be replaced with equivalent elements and the scope of the invention includes all other materials, shapes and dimensions.

## Claims

1. A dissuader (1) for animals (1a) comprising
- an emitter (2) of at least one sound emission to fend off said animal (1a);
**characterised in that**
- said sound emission comprises at least one main sound wave comprising a first emission period at a first frequency substantially ranging between 18 and 21 KHz; a second emission period at a frequency variable from said first to a second frequency substantially ranging between 27 and 30 KHz; a third emission period at said second frequency; a fourth emission period at a frequency variable from said second frequency to said first frequency.

2. A dissuader (1) according to claim 1, wherein said sound emission comprises a plurality of said main sound waves; and wherein said main sound waves differ from each other for at least one of said first frequency and said second frequency.

3. A dissuader (1), according to claim 2, wherein said main sound waves are emitted sequentially defining said sound emission which is variable overtime.

4. A dissuader (1), according to claim 2, wherein said main sound waves are emitted in mutual superimposition defining said polyphonic sound emission.

5. A dissuader (1) according to claims 3 and 4, wherein said main sound waves are emitted in mutual superimposition and sequentially.

6. A dissuader (1) according to claims 2-5, comprising a random number generator (4) adapted to generate a random number and a control unit (5) adapted to define said main sound waves on the basis of said random number so that said emitter (2) emits said sound emission depending on said random number.

7. A fending off method (10) **characterised in that** it comprises
- an emission stage (30) wherein an emitter (2) emits a sound emission comprising at least one main sound wave; said at least one main sound wave comprising a first emission period at a first frequency; a second emission period at a frequency variable from the first to a second frequency; a third emission period at said second frequency; a fourth emission period at a frequency variable from the second frequency to the first frequency; said first frequency substantially ranging between 18 and 21 KHz; and said second frequency substantially ranging between 27 and 30 KHz.

## Patentansprüche

1. Vorrichtung zum Abschrecken (1) von Tieren (1a), umfassend:
- einen Sender (2) mindestens einer Schallemission, um das genannte Tier (1a) abzuschrecken;
**dadurch gekennzeichnet, dass**
- die genannte Schallemission mindestens eine einen ersten Emissionszeitraum bei einer im Wesentlichen zwischen 18 und 21 KHz liegenden ersten Frequenz umfassende Hauptschallwelle; einen zweiten Emissionszeitraum bei einer von der genannten ersten bis zu einer im Wesentlichen zwischen 27 und 30 KHz liegenden zweiten Frequenz variierbaren Frequenz; einen dritten Emissionszeitraum bei der genannten zweiten Frequenz; einen vierten Emissionszeitraum bei einer von der genannten zweiten Frequenz bis zu der genannten ersten Frequenz variablen Frequenz umfasst.

2. Vorrichtung zum Abschrecken (1) nach Anspruch 1, bei der die genannte Schallemission eine Vielzahl der genannten Hauptschallwellen umfasst; und bei der die genannten Hauptschallwellen voneinander um mindestens eine der genannten ersten und der genannten zweiten Frequenz abweichen.

3. Vorrichtung zum Abschrecken (1) nach Anspruch 2, bei der die genannten Hauptschallwellen sequentiell emittiert werden und so die genannte Schallemission definieren, die zeitlich variable ist.

4. Vorrichtung zum Abschrecken (1) nach Anspruch 2, bei der die genannten Hauptschallwellen miteinander überlagert emittiert werden und so eine polyphone Schallemission definieren.

5. Vorrichtung zum Abschrecken (1) nach Anspruch 3 und 4, bei der die genannten Hauptschallwellen miteinander überlagert und sequentiell emittiert werden.

6. Vorrichtung zum Abschrecken (1) nach Anspruch 2-5, umfassend einen Zufallszahlgenerator (4), der geeignet ist, eine Zufallszahl zu generieren, und ein Steuergerät (5), das geeignet ist, die genannten Hauptschallwellen basierend auf der genannten Zufallszahl zu definieren, so dass der genannte Sender (2) die genannte Schallemission abhängig von der genannten Zufallszahl emittiert.

7. Ein Abschreckungsverfahren (10), **dadurch gekennzeichnet, dass** es Folgendes umfasst:
- - eine Emissionsstufe (30), bei der ein Sender (2) eine mindestens eine Hauptschallwelle umfassende Schallemission abgibt; wobei die genannte mindestens eine Hauptschallwelle einen ersten Emissionszeitraum bei einer ersten Frequenz umfasst; sowie einen zweiten Emissionszeitraum bei einer von der ersten bis zu einer zweiten Frequenz variablen Frequenz; einen dritten Emissionszeitraum bei der genannten zweiten Frequenz; einen vierten Emissionszeitraum bei einer von der zweiten Frequenz bis zur ersten Frequenz variablen Frequenz; wobei die genannte erste Frequenz im Wesentlichen zwischen 18 und 21 KHz liegt; und die genannte zweite Frequenz im Wesentlichen zwischen 27 und 30 KHz liegt.

## Revendications

1. Dispositif pour dissuader (1) des animaux (1a) comprenant
- un émetteur (2) d'au moins une émission sonore pour éloigner ledit animal (1a);
**caractérisé en ce que**
- ladite émission sonore comprend au moins une onde sonore principale comprenant une première période d'émission à une première fréquence se situant sensiblement entre 18 et 21 kHz ; une deuxième période d'émission à une fréquence variant de ladite première à une deuxième fréquence se situant sensiblement entre 27 et 30 kHz ; une troisième période d'émission à ladite deuxième fréquence ; une quatrième période d'émission à une fréquence variant de ladite deuxième fréquence à ladite première fréquence.

2. Dispositif pour dissuader (1) selon la revendication 1, dans lequel ladite émission sonore comprend une pluralité desdites ondes sonores principales ; et dans lequel lesdites ondes sonores principales diffèrent les unes des autres par au moins l'un parmi ladite première fréquence et ladite deuxième fréquence.

3. Dispositif pour dissuader (1) selon la revendication 2, dans lequel lesdites ondes sonores principales sont émises séquentiellement pour que ladite émission sonore soit variable dans le temps.

4. Dispositif pour dissuader (1) selon la revendication 2, dans lequel lesdites ondes sonores principales sont émises en superposition mutuelle pour obtenir ladite émission sonore polyphonique.

5. Dispositif pour dissuader (1) selon les revendications 3 et 4, dans lequel lesdites ondes sonores principales sont émises en superposition mutuelle et séquentiellement.

6. Dispositif pour dissuader (1) selon les revendications 2 à 5, comprenant un générateur de nombre aléatoire (4) conçu pour générer un nombre aléatoire et une unité de commande (5) conçue pour définir lesdites ondes sonores principales sur base dudit nombre aléatoire de sorte que ledit émetteur (2) émet ladite émission sonore en fonction dudit nombre aléatoire.

7. Méthode d'éloignement (10) **caractérisée en ce qu'**elle comprend
- un stade d'émission (30) dans lequel un émetteur (2) émet une émission sonore comprenant au moins une onde sonore principale ; ladite au moins une onde sonore principale comprenant une première période d'émission à une première fréquence ; une deuxième période d'émission à une fréquence variant de la première à une deuxième fréquence ; une troisième période d'émission à ladite deuxième fréquence ; une quatrième période d'émission à une fréquence variant de ladite deuxième fréquence à ladite première fréquence ; ladite première fréquence se situant sensiblement entre 18 et 21 kHz et ladite deuxième fréquence se situant sensiblement entre 27 et 30 kHz.
